# EUROPEAN PATENT APPLICATION

(11) **EP 4 530 711 A1**
(43) Date of publication of application: **02.04.2025**
(21) Application number: 24166351.7
(22) Date of filing: 26.03.2024
(51) Int. Cl.: G02F 1/13357, G09G 3/34

(54) **TRANSPARENT DISPLAY**

(30) Priority: 26.09.2023 TW 112136680
(71) Applicant: Asti Global Inc., Taiwan, 406 Taichung City (TW)
(72) Inventor: LIAO, CHIEN-SHOU, 406 Taichung City (TW)
(74) Representative: Wunderlich & Heim Patentanwälte PartG mbB

(57) **Abstract**

A transparent display (D) includes a liquid crystal module (1), a light-emitting diode module (2) and a control module (3). The liquid crystal module (1) includes a plurality of liquid crystal units (10). The light-emitting diode module (2) includes a plurality of LED chips (20). The control module (3) is configured to be electrically connected to the liquid crystal module (1) and the light-emitting diode module (2). The control module (3) is configured to control twist angles of a plurality of liquid crystal molecules (10M) of each of the liquid crystal units (10), so that the liquid crystal units (10) are configured to form an opaque area or a light-transmitting area, thereby blocking light from passing through the liquid crystal units (10) or allowing light to pass through the liquid crystal units (10).

## Description

### FIELD OF THE INVENTION

The present invention relates to a transparent display, and more particularly to a transparent display including a liquid crystal module.

### BACKGROUND OF THE INVENTION

The transparent display in the prior art can provide users with sufficient light transmittance experience, but the transparent display is also easily affected by the image light source and the surrounding ambient light, which reduces the visual effect of the transparent display for the user to watch the image.

### SUMMARY OF THE INVENTION

In response to the above-referenced technical inadequacy, the present invention provides a transparent display including a control module that can be configured to control (change or adjust) twist angles of a plurality of liquid crystal molecules of each of the liquid crystal units so as to make the liquid crystal units form an opaque area or a light-transmitting area, thereby blocking light from passing through the liquid crystal units or allowing light to pass through the liquid crystal units.

In order to solve the above-mentioned problems, one of the technical aspects adopted by the present invention is to provide a transparent display, which includes a liquid crystal module, a light-emitting diode module and a control module. The liquid crystal module includes a plurality of liquid crystal units that are configured to be operated independently. The light-emitting diode module includes a plurality of LED chips that are configured to be operated independently. The control module is configured to be electrically connected to the liquid crystal module and the light-emitting diode module. The control module is configured to control twist angles of a plurality of liquid crystal molecules of each of the liquid crystal units. The liquid crystal units of the liquid crystal module respectively correspond to the LED chips of the light-emitting diode module. The light-emitting diode module is configured to be disposed on the liquid crystal module to provide a predetermined image. When the control module is configured to turn on the LED chip, the LED chip is configured to provide a front light source and a back light source opposite to the front light source. When the control module is configured to turn on the LED chip, the control module is configured to control a corresponding one of the liquid crystal units to form an opaque area, thereby blocking the back light source generated by the LED chip from passing through the corresponding liquid crystal unit. When the control module is configured to turn off the LED chip, the control module is configured to control a corresponding one of the liquid crystal units to form a light-transmitting area, thereby allowing ambient light to pass through the corresponding liquid crystal unit.

In order to solve the above-mentioned problems, another one of the technical aspects adopted by the present invention is to provide a transparent display, which includes a liquid crystal module, a light-emitting diode module and a control module. The liquid crystal module includes a plurality of liquid crystal units that are configured to be operated independently. The light-emitting diode module includes a plurality of LED chips that are configured to be operated independently, and the light-emitting diode module has a gap space formed between the LED chips. The control module is configured to be electrically connected to the liquid crystal module and the light-emitting diode module. The control module is configured to control twist angles of a plurality of liquid crystal molecules of each of the liquid crystal units. Some of the liquid crystal units of the liquid crystal module respectively correspond to the LED chips of the light-emitting diode module, and another some of the liquid crystal units of the liquid crystal module simultaneously correspond to the gap space of the light-emitting diode module. The light-emitting diode module is configured to be disposed on the liquid crystal module to provide a predetermined image. When the control module is configured to turn on the LED chip, the LED chip is configured to provide a front light source and a back light source opposite to the front light source. When the control module is configured to turn on the LED chip, the control module is configured to control a corresponding one of the liquid crystal units to form an opaque area, thereby blocking the back light source generated by the LED chip from passing through the corresponding liquid crystal unit. When the control module is configured to turn off the LED chip, the control module is configured to control a corresponding one of the liquid crystal units to form a light-transmitting area, thereby allowing ambient light to pass through the corresponding liquid crystal unit. When illumination light located behind the liquid crystal module exceeds a predetermined intensity, the control module is configured to simultaneously control the liquid crystal units to form an entire light-shielding area, thereby blocking the illumination light exceeding the predetermined intensity from being transmitted to the light-emitting diode module through the liquid crystal units.

In order to solve the above-mentioned problems, yet another one of the technical aspects adopted by the present invention is to provide a transparent display, which includes a liquid crystal module, a light-emitting diode module and a control module. The liquid crystal module includes a plurality of liquid crystal units. The light-emitting diode module includes a plurality of LED chips. The control module is configured to be electrically connected to the liquid crystal module and the light-emitting diode module. The control module is configured to control twist angles of a plurality of liquid crystal molecules of each of the liquid crystal units, so that the liquid crystal units are configured to form an opaque area or a light-transmitting area.

Therefore, in the transparent display provided by the present invention, by virtue of "the liquid crystal module including a plurality of liquid crystal units," "the light-emitting diode module including a plurality of LED chips," "the control module being configured to be electrically connected to the liquid crystal module and the light-emitting diode module," and "the control module being configured to control twist angles of a plurality of liquid crystal molecules of each of the liquid crystal units," the liquid crystal units can be configured to form an opaque area or a light-transmitting area, thereby blocking light from passing through the liquid crystal units or allowing light to pass through the liquid crystal units.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a functional block diagram of a transparent display according to the present invention;
FIG. 2 is a schematic view of a liquid crystal module of the transparent display according to the present invention;
FIG. 3 is a schematic view of a light-emitting diode module of the transparent display according to the present invention;
FIG. 4 is a schematic view of a first operating mode (or a first use state) of the transparent display according to the first embodiment of the present invention;
FIG. 5 is a schematic view of a second operating mode (or a second use state) of the transparent display according to the first embodiment of the present invention;
FIG. 6 is a schematic view of a third operating mode (or a third use state) of the transparent display according to the first embodiment of the present invention;
FIG. 7 is a schematic view of one of different operating modes (or different use states) of the transparent display according to a second embodiment of the present invention;
FIG. 8 is a schematic view of a first operating mode of the transparent display according to a third embodiment of the present invention;
FIG. 9 is a schematic view of a second operating mode of the transparent display according to the third embodiment of the present invention; and
FIG. 10 is a schematic view of one of different operating modes of the transparent display according to a fourth embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

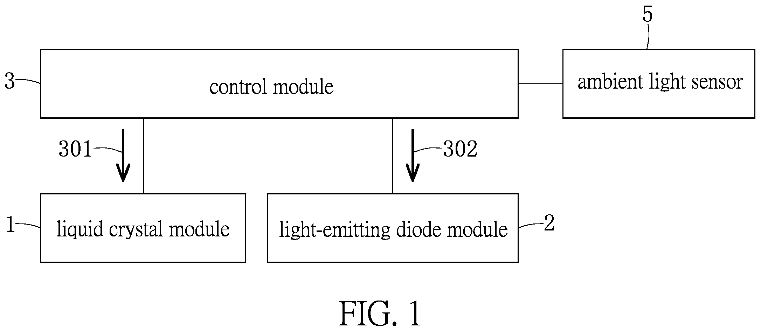

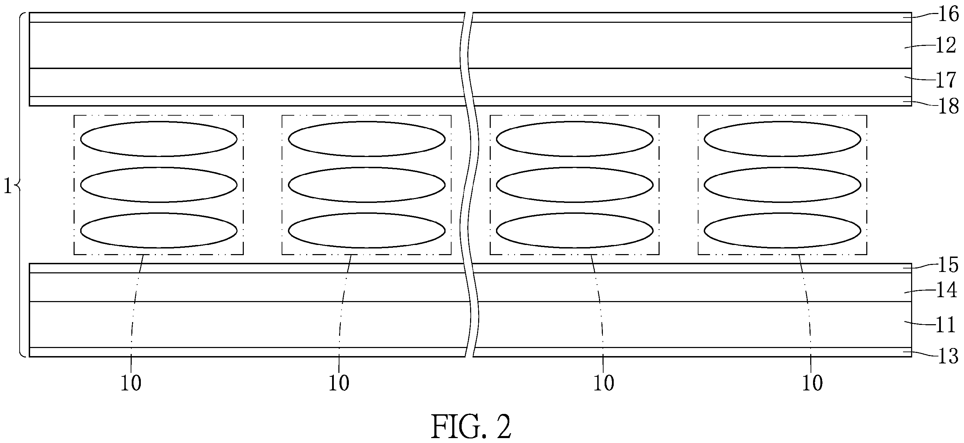

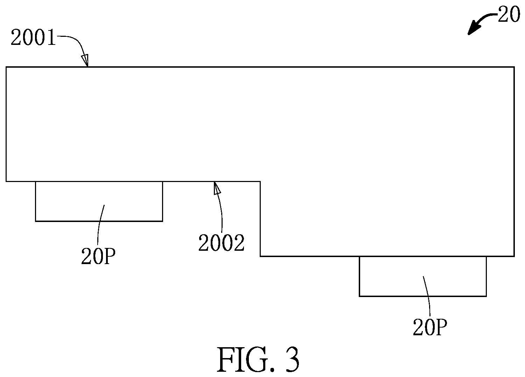

Referring to FIG. 1 to FIG. 10, the present invention provide a transparent display D (or a light-transmitting display, or a see-through display), which includes a liquid crystal module 1, a light-emitting diode (LED) module 2 and a control module 3. The liquid crystal module 1 includes a plurality of liquid crystal units 10, the light-emitting diode module 2 includes a plurality of LED chips 20, and the control module 3 is configured to be electrically connected to the liquid crystal module 1 and the light-emitting diode module 2. Therefore, when the control module 3 is configured to control twist angles of a plurality of liquid crystal molecules 10M (i.e., the twist angle of each liquid crystal molecule 10M) of each of the liquid crystal units 10, the liquid crystal units 10 can be configured to form an opaque area or a light-transmitting area.

### [First Embodiment]

Referring to FIG. 1 to FIG. 6, a first embodiment of the present invention provides a transparent display D, which includes a liquid crystal module 1, a light-emitting diode module 2 and a control module 3.

More particularly, referring to FIG. 1, FIG. 2 and FIG. 4, the liquid crystal module 1 includes a plurality of liquid crystal units 10 that can be configured to be operated independently, and the liquid crystal units 10 of the liquid crystal module 1 can respectively correspond to a plurality of LED chips 20 of the light-emitting diode module 2. For example, the liquid crystal module 1 may include a first light-transmitting substrate 11, a second light-transmitting substrate 12, a first polarizing plate 13 disposed on a bottom side of the first light-transmitting substrate 11, a first light-transmitting electrode layer 14 (such as a pixel electrode) disposed on a top side of the first light-transmitting substrate 11, a first alignment film 15 disposed on the first light-transmitting electrode layer 14, a second polarizing plate 16 disposed on a top side of the second light-transmitting substrate 12, a second light-transmitting electrode layer 17 (such as a common electrode) disposed on a bottom side of the second light-transmitting substrate 12 and a second alignment film 18 disposed on the second light-transmitting electrode layer 17, and the liquid crystal units 10 can be configured between the first alignment film 15 and the second alignment film 18. That is to say, the liquid crystal module 1 can be a liquid crystal panel without a color filter. However, the aforementioned details are disclosed for exemplary purposes.

More particularly, referring to FIG. 1, FIG. 3 and FIG. 4, the light-emitting diode module 2 includes a plurality of LED chips 20 that are configured to be operated independently, and the light-emitting diode module 2 can be configured to be disposed on the liquid crystal module 1 to provide a predetermined image (or predetermined picture) for viewing or watching by the user located in front of the transparent display D. Furthermore, the LED chip 20 can be configured to provide a front light source 20F and a back light source 20B opposite to the front light source 20F. For example, the LED chips 20 (such as mini LED chips or dies, micro LED chips or dies, or any kind of LED chips or dies) can be divided into a plurality of red LED chips, a plurality of green LED chips and a plurality of blue LED chips, and the red LED chip, the green LED chip and the blue LED chip adjacent to each other are configured to cooperate with each other to form an image pixel of the predetermined image (that is to say, the predetermined image can be composed of multiple image pixels). Moreover, each of the LED chips 20 of the light-emitting diode module 2 can be electrically connected to the liquid crystal module 1 through two conductive materials 20S (such as solder balls or any type of conductive material), so that the liquid crystal module 1 and the light-emitting diode module 2 can be electrically connected to each other. In addition, the front light source 20F generated by each of the LED chips 20 can be projected from a light output surface 2001 of the LED chip 20, and the back light source 20B generated by each of the LED chips 20 can be projected from an electrode surface 2002 of the LED chip 20. It should be noted that each of the LED chips 20 includes two conductive pads 20P disposed on the electrode surface 2002 thereof, and each of the LED chips 20 has no a reflective layer disposed on the electrode surface 2002 thereof (for example, no distributed Bragg reflection (DBR) is formed on the electrode surface 2002 of each LED chip 20), so that the back light source 20B generated by each LED chip 20 can be smoothly projected from the electrode surface 2002 of the LED chip 20. However, the aforementioned details are disclosed for exemplary purposes.

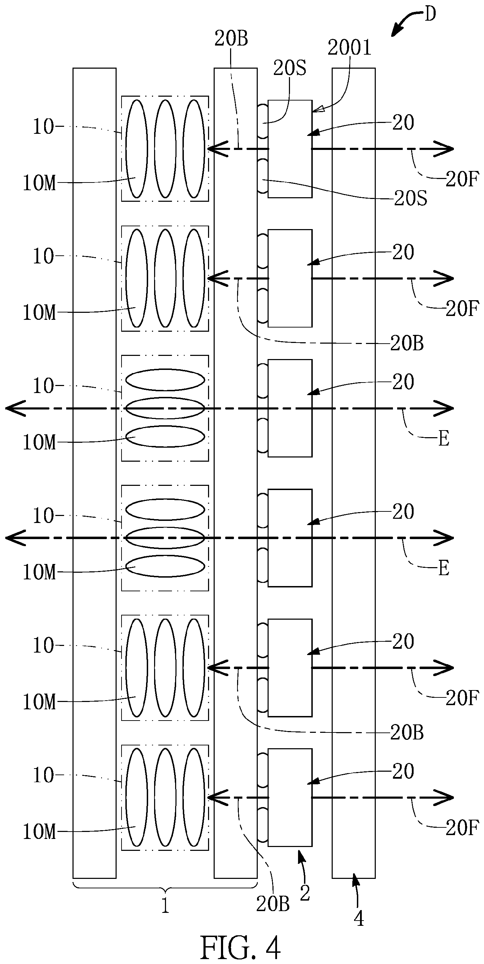

More particularly, referring to FIG. 1 and FIG. 4, the control module 3 can be configured to be electrically connected to the liquid crystal module 1 and the light-emitting diode module 2. For example, the control module 3 can be a central processing unit (CPU), a digital signal processor (DSP), a microprocessor (MPU), a microcontroller (MCU), etc. Moreover, when the control module 3 is configured to turn on the LED chip 20, the LED chip 20 can be configured to provide a front light source 20F and a back light source 20B opposite to the front light source 20F. In addition, when the control module 3 is configured to be electrically connected to the first light-transmitting electrode layer 14 and the second light-transmitting electrode layer 17, the control module 3 can be configured to control twist angles of a plurality of liquid crystal molecules 10M of each of the liquid crystal units 10, thereby allowing light to pass through the corresponding liquid crystal unit 10, or blocking light from passing through the corresponding liquid crystal unit 10. It should be noted that when the control module 3 is configured to turn on the LED chip 20 (for example, when the topmost two LED chips 20 and the bottommost two LED 20 as shown in FIG. 4 are turned on), the control module 3 can be configured to control a corresponding one of the liquid crystal units 10 to form an opaque area (i.e., an opaque liquid crystal unit 10), thereby blocking the back light source 20B generated by the LED chip 20 from passing through the corresponding liquid crystal unit 10 (that is to say, due to the blocking of the opaque area formed by the corresponding liquid crystal unit 10, the back light source 20B generated by the LED chip 20 cannot pass through the corresponding liquid crystal unit 10). In addition, when the control module 3 is configured to turn off the LED chip 20 (for example, when the two LED chips 20 in the middle as shown in FIG. 4 are turned off), the control module 3 can be configured to control a corresponding one of the liquid crystal units 10 to form a light-transmitting area (i.e., a light-transmitting liquid crystal unit 10), thereby allowing ambient light E to pass through the corresponding liquid crystal unit 10. However, the aforementioned details are disclosed for exemplary purposes.

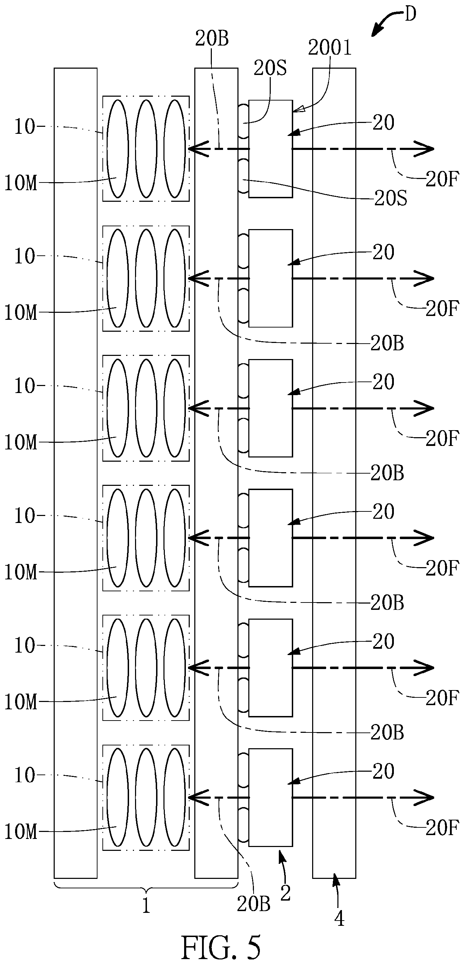

For example, as shown in FIG. 5, when the control module 3 is configured to simultaneously turn on the LED chips 20 of the light-emitting diode module 2, the control module 3 can be configured to simultaneously change or adjust the twist angles of the liquid crystal molecules 10M of the liquid crystal units 10, so that each of the liquid crystal units 10 can be configured to form the opaque area, thereby blocking the back light source 20B generated by each of the LED chips 20 from passing through the corresponding liquid crystal unit 10. Hence, when a user located in front of the transparent display D views or watches a predetermined image through the front light sources 20F generated by the LED chips 20, other people located behind the transparent display D cannot see the back light sources 20B generated by the LED chips 20 at all. It is worth noting that while the control module 3 is configured to simultaneously turn on the LED chips 20 of the light-emitting diode module 2, although the control module 3 can be configured to simultaneously control the liquid crystal units 10 to form the opaque areas, the transparent display D can still provide sufficient light transmission effect to the user located in front of the transparent display D through a gap space formed between the LED chips 20 (that is to say, the user can see the scene or the view behind the transparent display D through the light transmission effect provided by the transparent display D). Therefore, the liquid crystal module 1 can be configured to improve or enhance a contrast of the predetermined image provided by the light-emitting diode module 2 and reduce a halo phenomenon of the predetermined image provided by the light-emitting diode module 2. However, the aforementioned details are disclosed for exemplary purposes.

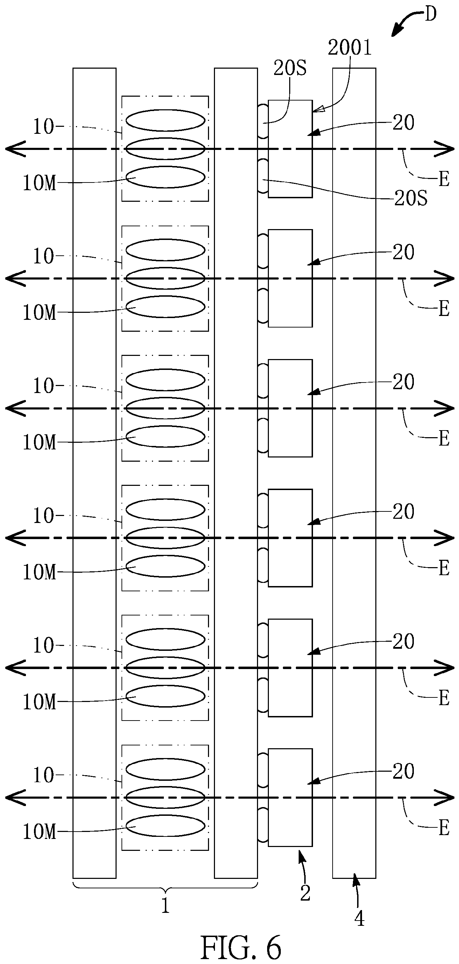

For example, as shown in FIG. 6, when the control module 3 is configured to simultaneously turn off the LED chips 20 of the light-emitting diode module 2, the control module 3 can be configured to simultaneously change or adjust the twist angles of the liquid crystal molecules 10M of the liquid crystal units 10, so that each of the liquid crystal units 10 can be configured to form the light-transmitting area, thereby allowing the ambient light E to pass through the liquid crystal units 10. Therefore, the transparent display D can provide the user with relatively high light transmittance through the light-transmitting areas formed by the liquid crystal units 10 and through a gap space formed between the LED chips 20. However, the aforementioned details are disclosed for exemplary purposes.

It should be noted that the transparent display D further includes a light-transmitting cover plate 4 (or a light-transmissive cover), and the light-transmitting cover plate 4 can be configured to cover the LED chips 20 of the light-emitting diode module 2. For example, the light-transmitting cover plate 4 can be a glass substrate or any kind of light-transmitting substrate, and the light-transmitting cover plate 4 can directly contact the LED chips 20 or be separated from the LED chips 20 by a predetermined distance. However, the aforementioned details are disclosed for exemplary purposes.

### [Second Embodiment]

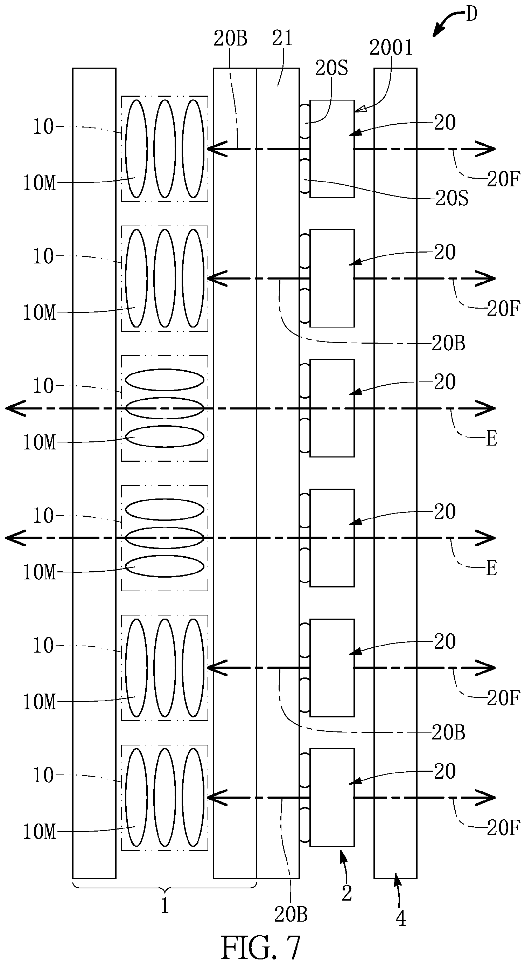

Referring to FIG. 1 to FIG. 3, and FIG. 7, a second embodiment of the present invention provides a transparent display D, which includes a liquid crystal module 1, a light-emitting diode module 2 and a control module 3. Comparing FIG. 7 with FIG. 4, the main difference between the second embodiment and the first embodiment is as follows: in the second embodiment, the light-emitting diode module 2 includes a light-transmitting carrier substrate 21, and each of the LED chips 20 of the light-emitting diode module 2 can be electrically connected to the light-transmitting carrier substrate 21 through two conductive materials 20S. In addition, the light-transmitting carrying substrate 21 can be configured to carry the LED chips 20 (that is to say, the LED chips 20 do not need to be arranged on the liquid crystal module 1 like the first embodiment), so that the liquid crystal module 1 and the light-emitting diode module 2 can be insulated from to each other, and the liquid crystal module 1 and the light-emitting diode module 2 can be manufactured independently and then assembled together.

### [Third Embodiment]

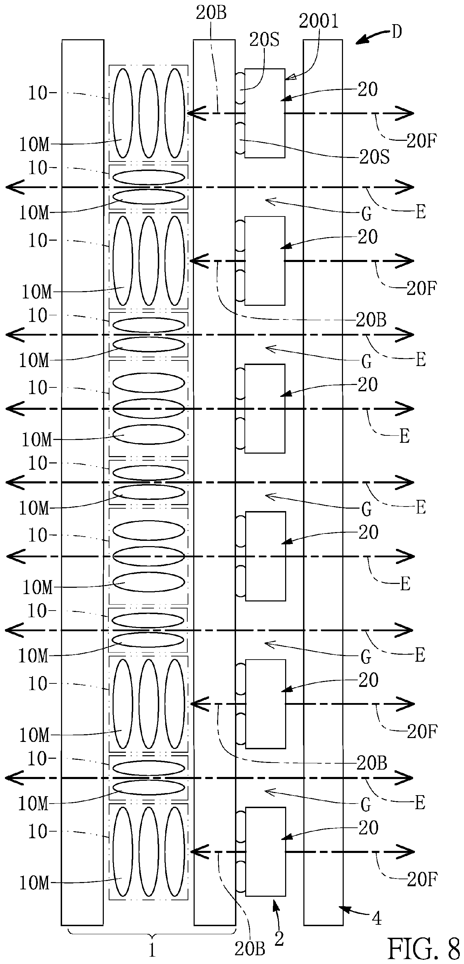

Referring to FIG. 1 to FIG. 3, FIG. 8 and FIG. 9, a third embodiment of the present invention provides a transparent display D, which includes a liquid crystal module 1, a light-emitting diode module 2 and a control module 3. Comparing FIG. 8 with FIG. 4, the main difference between the third embodiment and the first embodiment is as follows: in the third embodiment, the light-emitting diode module 2 has a gap space (such as an unoccupied space or a light-transmitting space) formed between the LED chips 20, some of the liquid crystal units 10 of the liquid crystal module 1 can respectively correspond to the LED chips 20 of the light-emitting diode module 2, and another some of the liquid crystal units 10 of the liquid crystal module 1 can simultaneously correspond to the gap space of the light-emitting diode module 2. For example, the LED chips 20 can be arranged in a predetermined shape, a gap channel G can be formed between each two adjacent LED chips 20, and the gap spaces formed between the LED chips 20 can be interconnected or communicated with each other by the gap channels G (it should be noted that the gap channels G as shown in FIG. 8 are only schematic representations from the side view and do not limit the actual positions of the gap channels G). However, the aforementioned details are disclosed for exemplary purposes.

It should be noted that as shown in FIG. 8, another some of the liquid crystal units 10 of the liquid crystal module 1 can simultaneously correspond to the gap space of the light-emitting diode module 2, so that the control module 3 can be configured to simultaneously change the twist angles of the liquid crystal molecules 10M of another some of the liquid crystal units 10 so as to make each of another some of the liquid crystal units 10 form a light-transmitting area, thereby allowing the ambient light E to pass through the gap channels G. Therefore, the transparent display D can provide the user with relatively high light transmittance through the light-transmitting areas formed by the liquid crystal units 10 and through a gap space (i.e., the gap channels) formed between the LED chips 20.

It should be noted that as shown in FIG. 1 and FIG. 8, the control module 3 can be configured to simultaneously (or synchronously) transmit a liquid crystal control signal 301 and an image control signal 302 to the liquid crystal module 1 and the light-emitting diode module 2 respectively, so that the liquid crystal units 10 of the liquid crystal module 1 and the LED chips 20 of the light-emitting diode module 2 can be operated synchronously (that is to say, the control module 3 does not need to use the ambient light information provided by the ambient light sensor to control the liquid crystal module 1). For example, according to the liquid crystal control signal 301 and the image control signal 302 provided by the control module 3, the liquid crystal unit 10 and the LED chip 20 can be turned on synchronously, turned off synchronously, turned on and off synchronously respectively, or turned off and turned on synchronously respectively, and the liquid crystal unit 10 and the LED chip 20 may or may not correspond to each other (for example, the liquid crystal unit 10 and the LED chip 20 may also be offset from each other). Furthermore, when an LED chip 20 is turned off through the control of the image control signal 302 provided by the control module 3 (at this time, the LED chip 20 is shown as a black pattern or a black pixel), the liquid crystal unit 10 corresponding to the gap channel G surrounding the LED chip 20 can be turned off synchronously through the control of the liquid crystal control signal 301 (at this time, the ambient light E cannot pass through the liquid crystal unit 10 corresponding to the gap channel G surrounding the LED chip 20), thereby improving the contrast of the black pattern or black pixels presented by the LED chip 20.

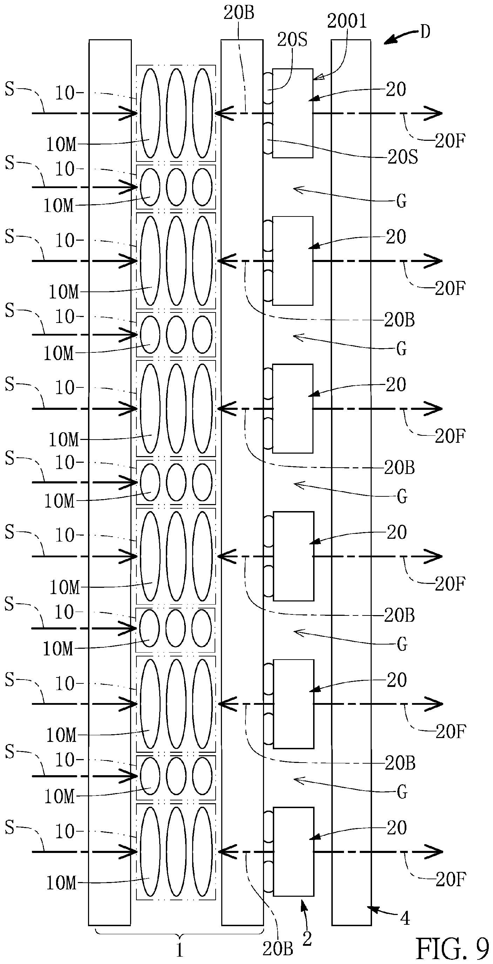

It should be noted that as shown in FIG. 1 and FIG. 9, the transparent display D further includes an ambient light sensor 5 electrically connected to the control module 3, and the ambient light sensor 5 can be configured to sense illumination light S (or irradiation light) located or generated behind the transparent display D. For example, the ambient light sensor 5 can be configured and placed at any position on the liquid crystal module 1 or the light-emitting diode module 2, or the ambient light sensor 5 can also be placed on another circuit substrate (not shown) and does not need to be provided on the liquid crystal module 1 or the light-emitting diode module 2. In addition, the light intensity information of the illumination light S sensed by the ambient light sensor 5 can be transmitted to the control module 3 through wired or wireless means. More particularly, when the illumination light S (such as outdoor sunlight or indoor lighting) located or generated behind the liquid crystal module 1 exceeds a predetermined intensity (such as a predetermined light intensity value that affects the user's viewing of the predetermined image provided by the light-emitting diode module 2), the control module 3 can be configured to simultaneously control or adjust the twist angles of the liquid crystal molecules 10M of the liquid crystal units 10, so that the liquid crystal units 10 can cooperate with each other to form the entire light-shielding area, thereby blocking the illumination light S exceeding the predetermined intensity from being transmitted to the light-emitting diode module 2 through the liquid crystal units 10. It should be noted that light transmittance of the entire light-shielding area formed by cooperation of the liquid crystal units 10 can be adjustable according to an intensity of the illumination light S that is sensed or obtained by the ambient light sensor 5 or different usage requirements (for example, the predetermined intensity can be numerically set according to the different needs of the user). However, the aforementioned details are disclosed for exemplary purposes.

### [Fourth Embodiment]

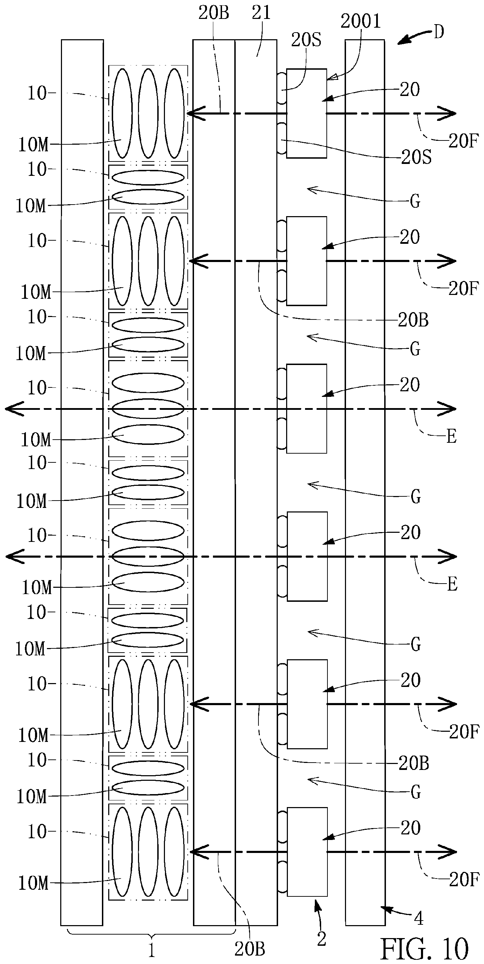

Referring to FIG. 1 to FIG. 3, and FIG. 10, a fourth embodiment of the present invention provides a transparent display D, which includes a liquid crystal module 1, a light-emitting diode module 2 and a control module 3. Comparing FIG. 10 with FIG. 8, the main difference between the fourth embodiment and the third embodiment is as follows: in the fourth embodiment, the light-emitting diode module 2 includes a light-transmitting carrier substrate 21, and each of the LED chips 20 of the light-emitting diode module 2 can be electrically connected to the light-transmitting carrier substrate 21 through two conductive materials 20S. In addition, the light-transmitting carrying substrate 21 can be configured to carry the LED chips 20 (that is to say, the LED chips 20 do not need to be arranged on the liquid crystal module 1 like the third embodiment), so that the liquid crystal module 1 and the light-emitting diode module 2 can be insulated from to each other, and the liquid crystal module 1 and the light-emitting diode module 2 can be manufactured independently and then assembled together.

### [Beneficial Effects of the Embodiments]

In conclusion, in the transparent display D provided by the present invention, by virtue of "the liquid crystal module 1 including a plurality of liquid crystal units 10," "the light-emitting diode module 2 including a plurality of LED chips 20," "the control module 3 being configured to be electrically connected to the liquid crystal module 1 and the light-emitting diode module 2," and "the control module 3 being configured to control twist angles of a plurality of liquid crystal molecules 10M of each of the liquid crystal units 10," the liquid crystal units 10 can be configured to form an opaque area or a light-transmitting area, thereby blocking the back light source 20B generated by the LED chip 20 from passing through the corresponding liquid crystal unit 10 or allowing ambient light E to pass through the corresponding liquid crystal unit 10.

For example, when the control module 3 is configured to turn on the LED chip 20, the control module 3 can be configured to control a corresponding one of the liquid crystal units 10 to form an opaque area, thereby blocking the back light source 20B generated by the LED chip 20 from passing through the corresponding liquid crystal unit 10. More particularly, when the control module 3 is configured to simultaneously turn on the LED chips 20 of the light-emitting diode module 2, the control module 3 can be configured to simultaneously change or adjust the twist angles of the liquid crystal molecules 10M of the liquid crystal units 10, so that each of the liquid crystal units 10 can be configured to form the opaque area, thereby blocking the back light source 20B generated by each of the LED chips 20 from passing through the corresponding liquid crystal unit 10.

For example, when the control module 3 is configured to turn off the LED chip 20, the control module 3 can be configured to control a corresponding one of the liquid crystal units 10 to form a light-transmitting area, thereby allowing ambient light E to pass through the corresponding liquid crystal unit 10. More particularly, when the control module 3 is configured to simultaneously turn off the LED chips 20 of the light-emitting diode module 2, the control module 3 can be configured to simultaneously change or adjust the twist angles of the liquid crystal molecules 10M of the liquid crystal units 10, so that each of the liquid crystal units 10 can be configured to form the light-transmitting area, thereby allowing the ambient light E to pass through the liquid crystal units 10.

For example, when the illumination light S located or generated behind the liquid crystal module 1 exceeds a predetermined intensity, the control module 3 can be configured to simultaneously control or adjust the twist angles of the liquid crystal molecules 10M of the liquid crystal units 10, so that the liquid crystal units 10 can cooperate with each other to form an entire light-shielding area, thereby blocking the illumination light S exceeding the predetermined intensity from being transmitted to the light-emitting diode module 2 through the liquid crystal units 10.

It should be noted that the ambient light sensor 5 may be omitted and not used in the first, second and fifth embodiments. That is to say, the control module 3 can be configured to directly control the liquid crystal module 1 through the liquid crystal control signal 301 and does not need to use the ambient light information provided by the ambient light sensor to control the liquid crystal module 1.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A transparent display (D), **characterized by** comprising:
a liquid crystal module (1) including a plurality of liquid crystal units (10);
a light-emitting diode module (2) including a plurality of LED chips (20); and
a control module (3) configured to be electrically connected to the liquid crystal module (1) and the light-emitting diode module (2);
wherein the control module (3) is configured to control twist angles of a plurality of liquid crystal molecules (10M) of each of the liquid crystal units (10), so that the liquid crystal units (10) are configured to form an opaque area or a light-transmitting area.

2. The transparent display (D) according to claim 1,
wherein the transparent display (D) further includes a light-transmitting cover plate (4), and the light-transmitting cover plate (4) is configured to cover the LED chips (20) of the light-emitting diode module (2);
wherein the liquid crystal units (10) of the liquid crystal module (1) respectively correspond to the LED chips (20) of the light-emitting diode module (2).

3. The transparent display (D) according to claim 1,
wherein the light-emitting diode module (2) is configured to be disposed on the liquid crystal module (1) to provide a predetermined image;
wherein the liquid crystal module (1) is a liquid crystal panel without a color filter, and the liquid crystal module (1) is configured to enhance a contrast of the predetermined image provided by the light-emitting diode module (2) and reduce a halo phenomenon of the predetermined image provided by the light-emitting diode module (2).

4. The transparent display (D) according to claim 1,
wherein, when the control module (3) is configured to turn on the LED chip (20), the LED chip (20) is configured to provide a front light source (20F) and a back light source (20B) opposite to the front light source (20F);
wherein the front light source (20F) generated by each of the LED chips (20) is projected from a light output surface (2001) of the LED chip (20), and the back light source (20B) generated by each of the LED chips (20) is projected from an electrode surface (2002) of the LED chip (20), each of the LED chips (20) includes two conductive pads (20P) disposed on the electrode surface (2002) thereof, and each of the LED chips (20) has no a reflective layer disposed on the electrode surface (2002) thereof.

5. The transparent display (D) according to claim 1,
wherein the control module (3) is configured to simultaneously transmit a liquid crystal control signal (301) and an image control signal (302) to the liquid crystal module (1) and the light-emitting diode module (2) respectively, so that the liquid crystal units (10) of the liquid crystal module (1) and the LED chips (20) of the light-emitting diode module (2) are operated synchronously.

6. The transparent display (D) according to claim 1,
wherein each of the LED chips (20) of the light-emitting diode module (2) is electrically connected to the liquid crystal module (1) through two conductive materials (20S), so that the liquid crystal module (1) and the light-emitting diode module (2) are electrically connected to each other.

7. The transparent display (D) according to claim 1,
wherein the light-emitting diode module (2) includes a light-transmitting carrier substrate (21), each of the LED chips (20) of the light-emitting diode module (2) is electrically connected to the light-transmitting carrier substrate (21) through two conductive materials (20S), and the liquid crystal module (1) and the light-emitting diode module (2) are insulated from to each other.

8. The transparent display (D) according to claim 1,
wherein the light-emitting diode module (2) has a gap space (G) formed between the LED chips (20), some of the liquid crystal units (10) of the liquid crystal module (1) respectively correspond to the LED chips (20) of the light-emitting diode module (2), and another some of the liquid crystal units (10) of the liquid crystal module (1) simultaneously correspond to the gap space (G) of the light-emitting diode module (2).

9. The transparent display (D) according to claim 1,
wherein the transparent display (D) further includes an ambient light sensor (5) electrically connected to the control module (3), and the ambient light sensor (5) is configured to sense the illumination light (S) located behind the transparent display (D);
wherein light transmittance of an entire light-shielding area formed by cooperation of the liquid crystal units (10) is adjustable according to an intensity of the illumination light (S) sensed by the ambient light sensor (5) or different usage requirements.

10. The transparent display (D) according to claim 1,
wherein the liquid crystal module (1) includes a first light-transmitting substrate (11), a second light-transmitting substrate (12), a first polarizing plate (13) disposed on a bottom side of the first light-transmitting substrate (11), a first light-transmitting electrode layer (14) disposed on a top side of the first light-transmitting substrate (11), a first alignment film (15) disposed on the first light-transmitting electrode layer (14), a second polarizing plate (16) disposed on a top side of the second light-transmitting substrate (12), a second light-transmitting electrode layer (17) disposed on a bottom side of the second light-transmitting substrate (12) and a second alignment film (18) disposed on the second light-transmitting electrode layer (17), and the liquid crystal units (10) are configured between the first alignment film (15) and the second alignment film (18), and the control module (3) is configured to be electrically connected to the first light-transmitting electrode layer (14) and the second light-transmitting electrode layer (17).

11. The transparent display (D) according to claim 1,
wherein the LED chips (20) are divided into a plurality of red LED chips, a plurality of green LED chips and a plurality of blue LED chips, and the red LED chip, the green LED chip and the blue LED chip adjacent to each other are configured to cooperate with each other to form an image pixel of the predetermined image.

12. The transparent display (D) according to claim 1,
wherein, when the control module (3) is configured to simultaneously turn on the LED chips (20) of the light-emitting diode module (2), the control module (3) is configured to simultaneously change the twist angles of the liquid crystal molecules (10M) of the liquid crystal units (10), so that each of the liquid crystal units (10) is configured to form the opaque area, thereby blocking the back light source (20B) generated by each of the LED chips (20) from passing through the corresponding liquid crystal unit (10).

13. The transparent display (D) according to claim 1,
wherein, when the control module (3) is configured to simultaneously turn off the LED chips (20) of the light-emitting diode module (2), the control module (3) is configured to simultaneously change the twist angles of the liquid crystal molecules (10M) of the liquid crystal units (10), so that each of the liquid crystal units (10) is configured to form the light-transmitting area, thereby allowing the ambient light (E) to pass through the liquid crystal units (10).

14. The transparent display (D) according to claim 1,
wherein, when illumination light (S) located behind the liquid crystal module (1) exceeds a predetermined intensity, the control module (3) is configured to simultaneously control the liquid crystal units (10) to form an entire light-shielding area, thereby blocking the illumination light (S) exceeding the predetermined intensity from being transmitted to the light-emitting diode module (2) through the liquid crystal units (10).

15. The transparent display (D) according to claim 1,
wherein the light-emitting diode module (2) is configured to be disposed on the liquid crystal module (1) to provide a predetermined image;
wherein, when the control module (3) is configured to turn on the LED chip (20), the LED chip (20) is configured to provide a front light source (20F) and a back light source (20B) opposite to the front light source (20F);
wherein, when the control module (3) is configured to turn on the LED chip (20), the control module (3) is configured to control a corresponding one of the liquid crystal units (10) to form an opaque area, thereby blocking the back light source (20B) generated by the LED chip (20) from passing through the corresponding liquid crystal unit (10);
wherein, when the control module (3) is configured to turn off the LED chip (20), the control module (3) is configured to control a corresponding one of the liquid crystal units (10) to form a light-transmitting area, thereby allowing ambient light (E) to pass through the corresponding liquid crystal unit (10).
